# EUROPEAN PATENT APPLICATION

(11) **EP 4 835 633 A1**
(43) Date of publication of application: **04.11.2026**
(21) Application number: 24910959.6
(22) Date of filing: 20.12.2024
(51) Int. Cl.: G06F 3/0481

(54) **METHOD AND APPARATUS FOR DISPLAYING INTERACTIVE CARD, AND ELECTRONIC DEVICE AND STORAGE MEDIUM**

(30) Priority: 29.12.2023 CN 202311869309
(71) Applicant: Beijing Zitiao Network Technology Co., Ltd., Beijing 100190 (CN)
(72) Inventor: LI, Jianzhao, Beijing 100028 (CN); FENG, Yuyao, Beijing 100028 (CN); ZHAO, Yuxuan, Beijing 100028 (CN)
(74) Representative: Grünecker Patent- und Rechtsanwälte PartG mbB
(86) International application number: PCT/CN2024/140939
(87) International publication number: WO 2025/140030

(57) **Abstract**

Embodiments of the present disclosure provide a presentation method and apparatus of an interaction element, an electronic device, and a storage medium. The method comprises: presenting a first interaction element sent by a first user in a chat interface of a chat, wherein interaction prompt information is presented in the first interaction element, and the interaction prompt information is configured to prompt a user in the chat to upload, based on the first interaction element, at least one first original picture corresponding to the first interaction element, wherein the at least one first original picture is configured to generate a first picture; and presenting, in response to a completion of generating the first picture, the first picture in the first interaction element.

## Description

### CROSS-REFERENCE TO RELATED APPLICATION(S)

The present application claims priority to Chinese Patent Application No. 202311869309.X, filed on December 29, 2023, entitled "METHOD AND APPARATUS FOR DISPLAYING INTERACTIVE CARD, AND ELECTRONIC DEVICE AND STORAGE MEDIUM", which is hereby incorporated by reference in its entirety.

### FIELD

Embodiments of the present disclosure relate to the field of computer technology and, in particular, to a presentation method, an apparatus of an interaction element, an electronic device, and a storage medium.

### BACKGROUND

At present, a user may interact with other users in a chat by sending chat information in a chat interface of the chat.

### SUMMARY

Embodiments of the present disclosure provide a presentation method, an apparatus, an electronic device, and a storage medium of an interaction element.

In a first aspect, an embodiment of the present disclosure provides a presentation method of an interaction element, comprising:
presenting a first interaction element sent by a first user in a chat interface of a chat, wherein interaction prompt information is presented in the first interaction element, and the interaction prompt information is configured to prompt a user in the chat to upload, based on the first interaction element, at least one first original picture corresponding to the first interaction element, the at least one first original picture is configured to generate a first picture; and
presenting, in response to a completion of generating the first picture, the first picture in the first interaction element.

In a second aspect, an embodiment of the present disclosure further provides a presentation apparatus of an interaction element, comprising:
an element presentation module , configured to present a first interaction element sent by a first user in a chat interface of a chat, wherein interaction prompt information is presented in the first interaction element, and the interaction prompt information is configured to prompt a user in the chat to upload, based on the first interaction element, at least one first original picture corresponding to the first interaction element, the at least one first original picture is configured to generate a first picture; and
a target picture presentation module , configured to present, in response to a completion of generating the first picture, the first picture in the first interaction element.

In a third aspect, an embodiment of the present disclosure further provides an electronic device, comprising:
one or more processors; and
a memory, configured to store one or more programs,
wherein the one or more programs, when executed by the one or more processors, cause the one or more processors to implement the presentation method of an interaction element according to embodiments of the present disclosure.

In a fourth aspect, an embodiment of the present disclosure further provides a computer-readable storage medium having a computer program stored thereon, wherein the program, when executed by a processor, implements the presentation method of an interaction element according to embodiments of the present disclosure.

According to the presentation method, the apparatus of an interaction element, the electronic device, and the storage medium provided by embodiments of the present disclosure, a first interaction element sent by a first user is presented in a chat interface of a chat, wherein interaction prompt information is presented in the first interaction element, and the interaction prompt information is configured to prompt a user in the chat to upload, based on the first interaction element, at least one first original picture corresponding to the first interaction element, the at least one first original picture is configured to generate a first picture; and the first picture is presented, in response to a completion of generating the first picture, in the first interaction element.

### BRIEF DESCRIPTION OF THE DRAWINGS

The above and other features, advantages, and aspects of embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale.
Fig. 1 is a schematic flowchart of a presentation method of an interaction element according to an embodiment of the present disclosure;
Fig. 2 is a schematic diagram of a presentation of a first interaction element according to an embodiment of the present disclosure;
Fig. 3 is a schematic diagram of a presentation of another first interaction element according to an embodiment of the present disclosure;
Fig. 4 is a schematic diagram of a presentation of a first picture presentation interface according to an embodiment of the present disclosure;
Fig. 5 is a schematic diagram of a presentation of another first picture presentation interface according to an embodiment of the present disclosure;
Fig. 6 is a schematic flowchart of a posting of a first interaction element according to an embodiment of the present disclosure;
Fig. 7 is a schematic flowchart of an upload of a first original picture according to an embodiment of the present disclosure;
Fig. 8 is a schematic flowchart of another presentation method of an interaction element according to an embodiment of the present disclosure;
Fig. 9 is a schematic diagram of a presentation of a second picture presentation interface according to an embodiment of the present disclosure;
Fig. 10 is a schematic diagram of a presentation of a first original picture according to an embodiment of the present disclosure;
Fig. 11 is a block diagram of a presentation apparatus of an interaction element according to an embodiment of the present disclosure; and
Fig. 12 is a schematic structural diagram of an electronic device according to an embodiment of the present disclosure.

### DETAILED DESCRIPTION OF EMBODIMENTS

Embodiments of the present disclosure will be described in more detail below with reference to the drawings. Although certain embodiments of the present disclosure are shown in the drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments of the present disclosure are only for illustrative purposes and are not intended to limit the protection scope of the present disclosure.

It should be understood that the various steps described in the method implementations of the present disclosure may be performed in different orders and/or in parallel. Furthermore, the method implementations may include additional steps and/or omit performing the illustrated steps. The scope of the present disclosure is not limited in this regard.

As used herein, the term "include/comprise" and variations thereof are open-ended inclusions, i.e., "include/comprise but not limited to". The term "based on" means "based at least in part on". The term "an embodiment" means "at least one embodiment"; the term "another embodiment" means "at least one other embodiment"; the term "some embodiments" means "at least some embodiments". Relevant definitions of other terms will be given in the description below.

It should be noted that concepts such as "first" and "second" mentioned in the present disclosure are only used to distinguish different apparatuses, modules, or units, and are not used to limit the sequence or interdependence of the functions performed by these apparatuses, modules, or units.

It should be noted that the modifiers "a" and "a plurality of" mentioned in the present disclosure are illustrative and not restrictive, and those skilled in the art should understand that unless otherwise clearly indicated in the context, they should be understood as "one or more".

The names of messages or information exchanged between multiple apparatuses in the implementations of the present disclosure are only used for illustrative purposes, and are not used to limit the scope of these messages or information.

It is to be understood that before using the technical solutions disclosed in the embodiments of the present disclosure, the user should be informed of the type, range of use, use scenarios, etc., of personal information involved in the present disclosure and obtain the authorization of the user in an appropriate manner in accordance with relevant laws and regulations.

For example, in response to receiving an active request from a user, prompt information is sent to the user to clearly prompt the user that the requested operation will require access to and use of the user's personal information. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to select whether to "agree" or "disagree" to provide the personal information to the electronic device.

It is to be understood that the above process of notifying and obtaining user authorization is only illustrative and does not limit the implementations of the present disclosure, and other manners that satisfy relevant laws and regulations may also be applied to the implementations of the present disclosure.

It is to be understood that the data involved in the technical solutions (including but not limited to the data itself, obtaining or use of the data) should comply with requirements of the corresponding laws, regulations, and related provisions.

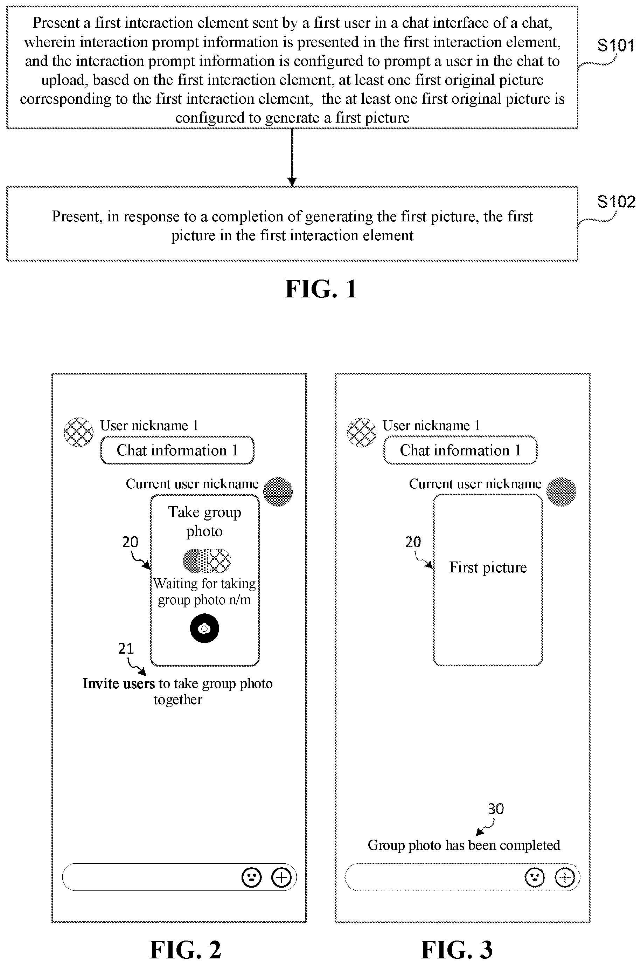

Fig. 1 is a schematic flowchart of a presentation method of an interaction element according to an embodiment of the present disclosure. The method may be performed by an presentation apparatus of an interaction element, wherein the apparatus may be implemented in software and/or hardware, and may be configured in an electronic device, typically in a mobile phone or a tablet computer. The presentation method of the interaction element provided by the embodiment of the present disclosure is applicable to a scenario where a target picture is generated based on an original picture uploaded by a user in a chat, and is, for example, applicable to a scenario where a group photo is generated based on single photos uploaded by users in a chat. As shown in Fig. 1, the presentation method of the interaction element provided by the embodiment of the present disclosure comprises the following steps.

S101: a first interaction element sent by a first user is presented in a chat interface of a chat, wherein interaction prompt information is presented in the first interaction element, and the interaction prompt information is configured to prompt a user in the chat to upload, based on the first interaction element, at least one first original picture corresponding to the first interaction element, the at least one first original picture is configured to generate a first picture.

The first interaction element may be a card for the user to upload the original picture for interaction, and it may be sent in the form of chat information. The chat may be a chat in which the first interaction element is presented in the chat interface, and the chat may comprise at least two users, for example, the chat may be a group-type chat or a non-group-type chat. The first user may be a user who sends the first interaction element in the chat.

The interaction prompt information is presented in the first interaction element. The interaction prompt information may be configured to prompt the user in the chat, for example, to prompt the user in the chat to upload the first original picture. The information content of the interaction prompt information is not limited. Optionally, the interaction prompt information comprises a current upload progress of the first original picture and/or a user identifier of an upload user of the at least one first original picture, wherein the upload user is a user who uploads the at least one first original picture.

The first original picture may be understood as an original picture corresponding to the first interaction element, which may be uploaded based on the first interaction element and may be configured to generate the first picture. The current upload progress of the first original picture may be an upload progress of the first original picture corresponding to the first interaction element, for example, a ratio of the number of the first original pictures that have been currently uploaded to a target upload number of the first original pictures. The upload user may be understood as a user who uploads the first original picture based on the first interaction element in the chat. The user identifier of the upload user may be identification information of the upload user, such as a user name and/or an avatar of the upload user.

For example, as shown in Fig. 2 (the current user is the first user as an example), the first interaction element 20 sent by the first user in the chat may be presented in the chat interface of the chat, and the interaction prompt information may be presented in the first interaction element 20. Through the interaction prompt information, the user in the chat is prompted that at least one first original picture may be uploaded based on the first interaction element.

In some implementations, when at least one first original picture has been uploaded for the first interaction element, at least part of the users in the chat may be supported to view a preview image of the first picture to be generated before the first picture is generated. In this case, the preview image of the first picture may be generated based on the first original picture that has been currently uploaded, and the at least part of the users include but not limited to the upload user of the first original picture, for example, the at least part of the users may comprise any user in the chat.

For example, in the case where it is detected that the current user performs a picture preview operation based on the first interaction element, the preview image of the first picture may be generated based on at least part of the first original pictures that have been currently uploaded for the first interaction element, and the generated preview image may be presented.

At this time, optionally, after presenting the first interaction element sent by the first user in the chat interface of the chat, the method further comprises: presenting a preview image of the first picture in response to a picture preview operation based on the first interaction element.

The preview operation may be a trigger operation configured to instruct to present the preview image of the first picture, and an execution manner of the preview operation is not limited. For example, the preview operation may be applied on a preview control corresponding to the first interaction element, and the preview control may be presented at an associated position of the first interaction element in the chat interface and/or presented in a first picture presentation interface of the first interaction element, etc.

In some implementations, after presenting the first interaction element sent by the first user in the chat interface of the chat, the method further comprises: presenting an invitation panel in response to an invitation operation based on the first interaction element, wherein the invitation panel is configured to trigger to invite a user to be invited to join the chat to view the first interaction element, and the user to be invited is a user selected by the current user in the invitation panel.

The invitation operation may be a trigger operation configured to instruct to present the invitation panel, such as an operation of triggering an invitation control presented at an associated position of the first interaction element in the chat interface. The user to be invited is a user selected by the current user in the invitation panel.

In the above implementation, the user in the chat may be supported to invite one or more users who are not in the chat to join the chat based on the first interaction element, so as to view the first interaction element in the chat and/or interact based on the first interaction element in the chat, thereby further enriching the functions of the chat interface.

For example, as shown in Fig. 2, when the first interaction element 20 is presented in the chat interface of the chat, the invitation control 21 may be further presented at an associated position of the first interaction element 20. In this way, in the case where the invitation operation based on the first interaction element 20 is received, for example, when it is detected that the current user triggers the invitation control 21 presented in the chat interface, the invitation panel may be presented, and one or more candidate users of the current user may be presented in the invitation panel for the current user to select from. Further, when the current user has completed the selection, for example, when a confirmation invitation operation of the current user in the invitation panel is received, a candidate user in a selected state in the invitation panel may be configured as the user to be invited, and the user to be invited may be invited to join the chat to view the first interaction element 20. The candidate user may not be in the chat, and may be a user who has a preset association relationship with the current user. The preset association relationship may comprise, for example, a friend relationship or a follower relationship.

In some implementations, after presenting the first interaction element sent by the first user in the chat interface of the chat, the method further comprises: presenting a prompt panel in response to a prompt operation based on the first interaction element, wherein the prompt panel supports sending preset chat information to a user to be prompted, the user to be prompted is a user selected by the current user in the prompt panel, and the preset chat information is configured to prompt the user to be prompted to view the first interaction element.

The prompt operation may be a trigger operation configured to instruct to present the prompt panel, such as an operation of triggering a prompt control presented at an associated position of the first interaction element in the chat interface. The user to be prompted is a user selected by the current user in the prompt panel. The preset chat information may be a chat message configured to prompt to view the first interaction element.

In the above implementation, it is supported that a user in the chat can prompt one or more other users other than the user in the chat to view the first interaction element, thereby further enriching the functions of the chat interface.

For example, when the first interaction element is presented in the chat interface of the chat, a prompt control may be further presented at an associated position of the first interaction element. In this way, in the case where the prompt operation based on the first interaction element is received, for example, when it is detected that the current user triggers the prompt control presented in the chat interface, the prompt panel may be presented, and at least part of the users in the chat may be presented in the prompt panel for the current user to select from. Further, when the current user has completed the selection, for example, when a confirmation operation of the current user in the prompt panel is received, a user in a selected state in the prompt panel may be configured as the user to be prompted, and the preset chat information configured to prompt the user to be prompted to view the first interaction element may be sent to the user to be prompted.

The method for sending the preset chat information is not limited. For example, the preset chat information may be sent in the chat or a chat other than the chat. Taking the chat as a group-type chat as an example, the preset chat information may be sent in the chat and/or a personal chat between the current user and each user to be prompted. In the following, the case where the preset chat information is sent in the chat is used as an example for illustration. The information content of the preset chat information is not limited. For example, the preset chat information may be chat information that mentions the user to be prompted, such as @ information for the user to be prompted.

S102: the first picture is presented in the first interaction element in response to a completion of generating the first picture.

For example, the first original picture uploaded for the first interaction element 20 may be configured to generate the first picture corresponding to the first interaction element 20. After the first picture is generated, the generated first picture may be presented in the first interaction element 20, as shown in Fig. 3, so as to further enrich the presentation content of the first interaction element 20 and provide convenience for the user to view the generated first picture.

In some implementations, the first picture may be generated based on the first original picture of the first interaction element, for example, based on at least one first original picture of the first interaction element. Optionally, the first picture is generated based on first original pictures uploaded by at least two users in the chat. In other words, the first picture may be generated based on first original pictures uploaded by different users. It is to be understood that the first picture may be generated based on a generative artificial intelligence (Artificial Intelligence Generated Content, AIGC) generation model. The method for generating the first picture is not limited.

In some implementations, the first picture may be generated by the current application or the server when the current conditions satisfy a preset generation condition. The preset generation condition may be flexibly set as needed. Optionally, the first picture is generated when the current condition satisfies a preset picture generation condition, and the preset picture generation condition comprises: a total number of the first original pictures reaches a target upload number; or a picture generation operation based on the first interaction element is received; or the sending of the first interaction element is completed.

For example, the first picture may be generated when the total number of the first original pictures reaches the target upload number or when the picture generation operation based on the first interaction element is received; or the first picture may be generated upon a completion of sending of the first interaction element. The total number of the first original pictures may be the total number of the first original pictures that have been currently uploaded; the target upload number may be a preset upload number of the first original pictures for the first interaction element; the picture generation operation may be a trigger operation configured to instruct to generate the first picture, and for example, the picture generation operation may be performed by the user who sends the first interaction element (i.e., the first user).

The number of the first pictures generated based on at least part of the first original pictures of the first interaction element is not limited, for example, one or more first pictures may be generated. For example, multiple first pictures may be generated. In this case, a preset first picture may be presented in the first interaction element, for example, the k-th (k is a positive integer) first picture is presented; or different first pictures may be switched and presented in the first interaction element. In this case, optionally, the presenting the first picture in the first interaction element comprises: switching and presenting different first pictures in the first interaction element.

In some implementations, the presentation method of the interaction element may further comprise: determining at least one generated picture corresponding to a picture confirmation operation in a plurality of generated pictures as the first picture in response to the picture confirmation operation, wherein each of the plurality of generated pictures is generated based on the at least one first original picture.

The generated picture may be a picture generated based on at least one first original picture, and the generated picture may be determined as the first picture based on the picture confirmation operation of the user. The picture confirmation operation may be a trigger operation configured to determine the generated first picture, such as an operation of triggering a picture confirmation control after at least one generated picture is selected. The picture confirmation operation may support being performed by at least part of the users in the chat, for example, by the upload user of the first original picture or the sending user (i.e., the first user) of the first interaction element. This is not limited in this embodiment.

In the above implementation, the user may be supported to determine the first picture among the plurality of generated pictures generated based on the first original picture, so as to improve the availability of the first picture, thereby further improving the user's picture generation experience.

For example, multiple generated pictures may be generated based on the original picture of the first interaction element, and the multiple generated pictures may be presented to the user for the current user to select and confirm. In this way, when the picture confirmation operation of the current user is received, a generated picture corresponding to the selection and confirmation operation performed by the current user in the multiple generated pictures may be determined as the first picture, for example, a generated picture in a selected state in the multiple generated pictures is determined as the first picture.

According to the presentation method of the interaction element provided by this embodiment, the first interaction element sent by the first user is presented in the chat interface of the chat, wherein the interaction prompt information is presented in the first interaction element, and the interaction prompt information is configured to prompt the user in the chat to upload at least one first original picture corresponding to the first interaction element based on the first interaction element, the at least one first original picture is configured to generate the first picture; and the first picture is presented in the first interaction element in response to a completion of generating the first picture. In the technical solutions used by this embodiment, it supports sending the interaction element in the chat interface, and uploading the original picture, and generating and presenting the target picture based on the interaction element, which may enrich the interaction manners based on the chat interface and the content supported to be sent and presented in the chat interface.

In some embodiments, the presentation method of the interaction element may further comprise: presenting a picture obtaining interface; determining a picture to be uploaded obtained by the current user in the picture obtaining interface in response to an obtaining complete operation on the picture obtaining interface, and presenting a picture editing interface of the picture to be uploaded; and uploading a confirmed picture to be uploaded as the at least one first original picture corresponding to the first interaction element in response to a first confirmation operation on the picture editing interface.

The picture obtaining interface may be an interface for obtaining the picture to be uploaded, which may comprise a shooting interface and/or a picture interface, and the picture interface may be, for example, a local album interface. The obtaining complete operation may be an operation configured to instruct that the obtaining of the picture to be uploaded is complete. For example, when the picture obtaining interface is the shooting interface, the obtaining complete operation may be a shooting complete operation, such as an operation of ending triggering a shooting control in the shooting interface; and when the picture obtaining interface is the picture interface, the obtaining complete operation may be a selection complete operation, such as an operation of triggering a confirmation control in the picture interface after at least one picture is selected.

The picture to be uploaded may be a picture obtained by the current user in the picture obtaining interface, such as a picture shot or selected by the current user in the picture obtaining interface. The picture editing interface may be an interface for the current user to edit the picture to be uploaded. The first confirmation operation may be an operation configured to instruct to confirm uploading the picture, such as an operation of triggering an upload confirmation control in the picture editing interface. The confirmed picture to be uploaded may be understood as the picture to be uploaded that is confirmed to be uploaded by the user. For example, if the current user does not edit the picture to be uploaded in the picture editing interface, the confirmed picture to be uploaded may be the picture to be uploaded obtained by the user in the picture obtaining interface; and if the current user edits the picture to be uploaded in the picture editing interface, the confirmed picture to be uploaded may be the picture to be uploaded that is edited by the user.

In the above implementation, the user may be supported to shoot a picture for uploading or select a picture from the local for uploading, and the user is supported to edit the picture before uploading, so as to meet different picture uploading requirements of the user.

For example, the picture obtaining interface may be presented to allow the user to obtain the picture to be uploaded; in the case where the obtaining complete operation on the picture obtaining interface by the current user is received, the picture to be uploaded obtained by the current user in the picture obtaining interface is determined, and the picture editing interface of the picture to be uploaded is presented; and in the case where the first confirmation operation on the picture editing interface by the current user is received, a picture to be uploaded corresponding to the first confirmation operation is uploaded as the at least one first original picture corresponding to the first interaction element.

In some embodiments, the current user and the first user may be the same user, and the first interaction element may be sent by the current user. For example, the current user may send the first interaction element after uploading at least one first original picture, so that other users in the chat may continue to upload pictures based on the first interaction element. For example, in the case where the first confirmation operation on the picture editing interface by the current user is received, a picture to be uploaded corresponding to the first confirmation operation is uploaded as the at least one first original picture corresponding to the first interaction element, the first interaction element is sent in the form of the chat information in the chat interface, and the first interaction element is presented in the chat interface. At this time, optionally, the current user is the first user, and the presenting the first interaction element sent by the first user in the chat interface of the chat comprises: sending the first interaction element in the form of chat information in the chat interface and presenting the first interaction element in the chat interface in response to the first confirmation operation on the picture editing interface.

In some embodiments, the user who sends the first interaction element may be supported to perform attribute editing on the first picture to be generated. For example, when the first interaction element is sent by the current user, the current user may be supported to perform attribute editing on the first picture to be generated. At this time, optionally, the current user is the first user, and before the presenting the picture obtaining interface, the method further comprises: presenting an attribute editing panel of the first picture in response to a preset trigger operation on the chat interface, and presenting at least one attribute editing item in the attribute editing panel, wherein the at least one attribute editing item comprises a style editing item and/or a number editing item, the style editing item is configured to edit a picture style of the first picture, and the number editing item is configured to edit a target upload number of first original pictures for generating the first picture.

The attribute editing panel of the first picture may be a panel configured to edit attributes of the first picture, and the attribute editing panel may comprise one or more attribute editing items, and different attribute editing items may be configured to edit different attributes of the first picture. For example, the at least one attribute editing item may comprise a style editing item and/or a number editing item, the style editing item may be configured to edit the picture style of the first picture, and the number editing item may be configured to edit the target upload number of the first original pictures. The target upload number may be understood as the total number of the first original pictures to be uploaded for generating the first picture. For example, the target upload number may be the maximum number of the first original pictures that the first interaction element supports to upload, and/or the preset number or the maximum number of the first original pictures configured for generating each first picture, and so on. It is be understood that the first picture may be generated based on the AIGC generation model corresponding to the style selected by the user.

The preset trigger operation may be a trigger operation configured to instruct to display the attribute editing panel of the first picture, and the execution manner of the preset trigger operation is not limited, as long as the corresponding effect may be achieved. Optionally, the preset trigger operation is applied on a preset control presented in the chat interface; or the preset trigger operation is applied on a second interaction element sent by a second user, a second picture is presented in the second interaction element, and the second picture is generated based on at least one second original picture corresponding to the second interaction element.

The preset control may be a control in the chat interface that is configured to trigger the presentation of the attribute editing panel of the first picture. The second interaction element may be an interaction element triggered by the current user when performing the preset trigger operation, which is different from the first interaction element. The second interaction element may support the user in the chat to upload a second original picture to generate the second picture based on at least one second original picture. The second user may be a user who sends the second interaction element in the chat, and the second user and the first user may be the same or different users in the chat. The second original picture may be an original picture uploaded by the user in the chat based on the second interaction element; and the second picture may be a target picture generated based on at least one second original picture of the second interaction element.

For example, when the second picture has not been generated, the second interaction element may support the user in the chat to trigger to upload the second original picture; and after the second picture has been generated, the second interaction element may support the user in the chat to trigger to send a new interaction element (such as the first interaction element) and/or view the second picture. When triggering to send the new interaction element, the second original picture of the second interaction element may not be configured as an original picture of the newly sent interaction element; or the second original picture of the second interaction element may be configured as the original picture of the newly sent interaction element, for example, as part of the original pictures of the newly sent interaction element. In this case, optionally, the preset trigger operation is applied on the second interaction element sent by the second user, and the presentation method of the interaction element further comprises: using the at least one second original picture corresponding to the second interaction element as part of the first original pictures corresponding to the first interaction element.

For example, the attribute editing panel of the first picture may be presented in response to the preset trigger operation is applied on the chat interface by the current user, and at least one attribute editing item may be presented in the attribute editing panel, for example, the style editing item and/or the number editing item of the first picture may be presented in the attribute editing panel, for the current user to edit the picture style of the first picture to be generated and/or the target upload number of the first original pictures for generating the first picture.

In this embodiment, the user may be supported to switch from the attribute editing panel to the picture obtaining interface. For example, the attribute confirmation control may be presented in the attribute editing panel, so that when it is detected that the current user triggers the attribute confirmation control, the current interface may be switched from the chat interface to the picture obtaining interface, so that the current user may obtain the picture to be uploaded. At this time, optionally, the presenting the picture obtaining interface comprises: presenting the picture obtaining interface in response to a second confirmation operation on the attribute editing panel. The second confirmation operation may be a trigger operation configured to instruct to present the picture obtaining interface, and the second confirmation operation may apply on the attribute editing panel, and the execution manner of the second confirmation operation is not limited. For example, the second confirmation operation may be an operation of triggering the attribute confirmation control presented in the attribute editing panel.

In some embodiments, the current user and the first user may be different users, and the first interaction element may be sent by a user (i.e., the first user) different from the current user in the chat. In this case, the current user may upload the first original picture corresponding to the first interaction element based on the first interaction element sent by the first user. For example, in the case where the picture upload operation based on the first interaction element by the current user is received, the picture obtaining interface may be presented in response to the picture upload operation, for the current user to obtain and upload the first original picture corresponding to the first interaction element. At this time, optionally, the current user is not the first user, and the presenting the picture obtaining interface comprises: presenting the picture obtaining interface in response to a picture upload operation based on the first interaction element. The picture upload operation may be a trigger operation configured to instruct to present the picture obtaining interface corresponding to the first interaction element, and the execution manner of the picture upload operation is not limited.

In some embodiments, after presenting the first interaction element sent by the first user in the chat interface of the chat, the method further comprises: displaying a first picture presentation interface of the first interaction element in response to a first picture presentation operation based on the first interaction element, wherein the first picture presentation interface is configured to present the at least one first original picture.

The first picture presentation operation may be a trigger operation configured to instruct to present the first original picture of the first interaction element in the first picture presentation interface. The execution manner of the first picture presentation operation is not limited. For example, the first picture presentation operation may comprise, but is not limited to, an operation of triggering the first interaction element presented in the chat interface, such as an operation of triggering the first interaction element in the case where the first picture has not been generated. The first picture presentation interface may be an interface, such as a picture presentation panel, configured to present the at least one first original picture of the first interaction element.

In the above implementation, the user in the chat may be supported to view at least part of the first original pictures that have been currently uploaded for the first interaction element by performing the first picture presentation operation, so as to satisfy the user's requirement for viewing the first original pictures.

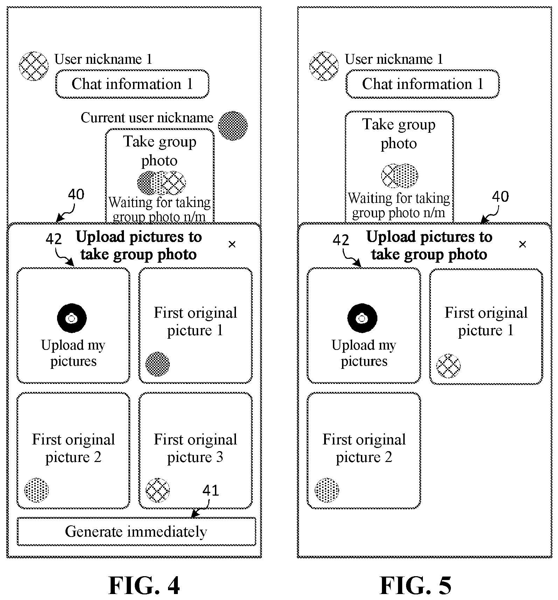

For example, in the case where the first picture presentation operation based on the first interaction element 20 is received, for example, in the case where it is detected that the current user triggers the first interaction element 20 presented in the chat interface when the first picture has not been generated, the first picture presentation interface 40 may be presented. For example, the first picture presentation interface 40 may be presented in the form of a presentation panel in the chat interface, the at least one first original picture of the first interaction element 20 may be presented in the first picture presentation interface, and the user identifier of the upload user of the first original picture may be further presented at an associated position (such as the lower left corner of the first original picture as shown in Figs. 4 and 5) of each first original picture, as shown in Figs. 4 and 5 (where Fig. 4 takes the current user as the first user as an example, and Fig. 5 takes the current user as a user other than the first user as an example).

Please continue to refer to Figs. 4 and 5, in addition to the first original picture, a picture generation control 41 and/or a picture upload control 42 may be further presented in the first picture presentation interface, so that the current user may trigger the picture generation control 41 to perform the picture generation operation based on the first interaction element 20 to instruct to generate the first picture; and/or trigger the picture upload control 42 to perform the picture upload operation based on the first interaction element 20 to upload the first original picture corresponding to the first interaction element 20.

At this time, optionally, the picture generation control and/or the picture upload control are further presented in the first picture presentation interface, the picture generation control is configured to trigger to perform a picture generation operation based on the first interaction element, and the picture upload control is configured to trigger to perform a picture upload operation based on the first interaction element.

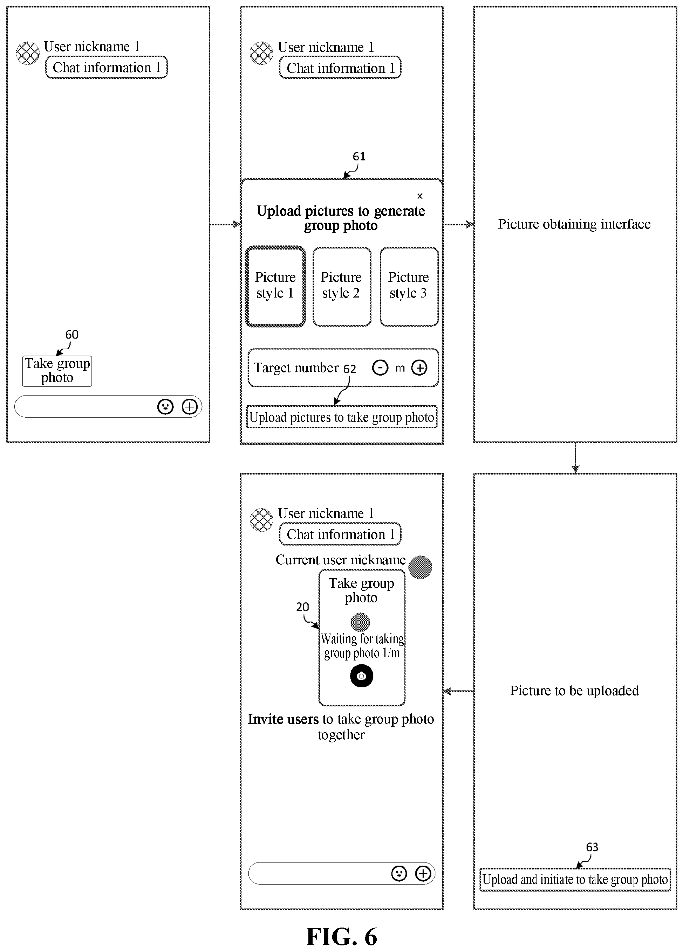

Fig. 6 is a schematic flowchart of a post of a first interaction element according to an embodiment of the present disclosure. As shown in Fig. 6, in some optional embodiments, the first interaction element may be sent in the following manner:
presenting a preset control 60 in a chat interface (as shown in a first figure in Fig. 6).

When it is detected that a current user triggers the preset control 60 presented in the chat interface, it is determined that a preset trigger operation is received, and in response to the preset trigger operation, an attribute editing panel 61 of a first picture is presented in the chat interface, a style editing item and/or a number editing item of the first picture are presented in the attribute editing panel 61, and an attribute confirmation control 62 is presented (as shown in a second figure in Fig. 6), for the current user to edit attributes of the first picture.

When it is detected that the current user triggers the attribute confirmation control 62 presented in the attribute editing panel 61, it is determined that a second confirmation operation is received, and in response to the second confirmation operation, the current interface is switched from the chat interface to a picture obtaining interface (as shown in a third figure in Fig. 6), for the current user to obtain a picture to be generated.

When an obtaining complete operation on the picture obtaining interface is received, the current interface is switched from the picture obtaining interface to a picture editing interface, a picture to be uploaded is presented in the picture editing interface for the current user to edit the picture to be uploaded, and an upload confirmation control 63 may be further presented in the picture obtaining interface (as shown in a fourth figure in Fig. 6).

When it is detected that the current user triggers the upload confirmation control 63 presented in the picture editing interface, it is determined that the first confirmation operation is received, and in response to the first confirmation operation, a picture to be uploaded corresponding to the first confirmation operation is uploaded as the first original picture of the first interaction element 20, the first interaction element 20 is sent in the form of the chat information in the chat interface, and the first interaction element 20 is presented in the chat interface (as shown in a fifth figure in Fig. 6, where an example in which the current user uploads one first original picture is shown in the figure).

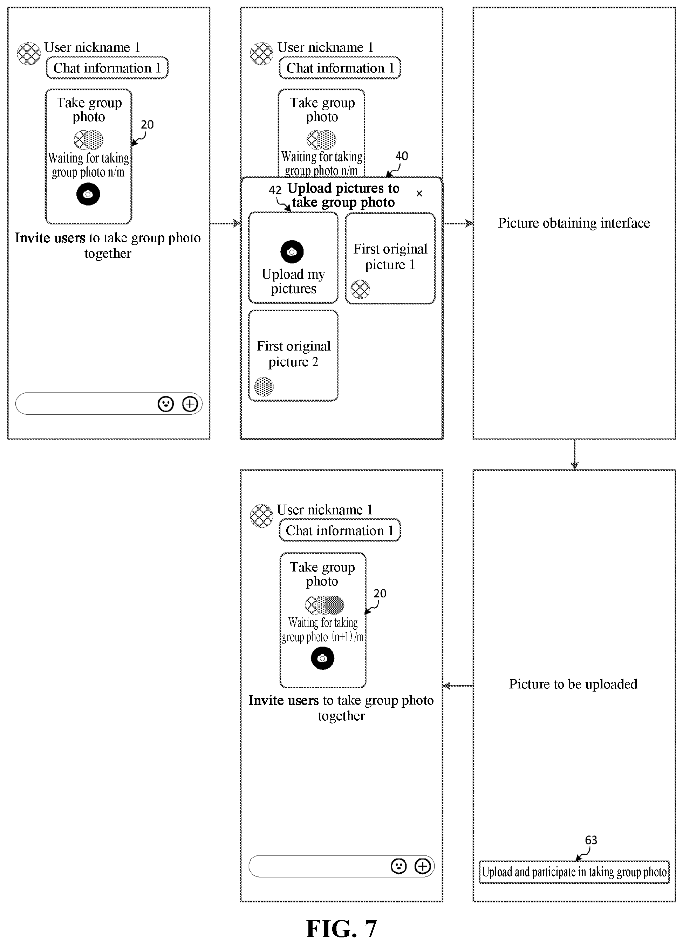

Fig. 7 is a schematic flowchart of an upload of a first original picture according to an embodiment of the present disclosure. As shown in Fig. 7, in some optional embodiments, the first original picture corresponding to the first interaction element may be uploaded in the following manner:
presenting the first interaction element 20 sent by the first user in the chat interface, and presenting interaction prompt information in the first interaction element 20 (as shown in a first figure in Fig. 7).

When it is detected that the current user triggers the first interaction element 20 presented in the chat interface, it is determined that a first picture presentation operation is received, and in response to the first picture presentation operation, a first picture presentation interface 40 of the first interaction element is presented, and the at least one first original picture of the first interaction element and a picture upload control 42 are presented in the first picture presentation interface 40 (as shown in a second figure in Fig. 7).

When it is detected that the current user triggers the picture upload control 42 presented in the first picture presentation interface 40, it is determined that a picture upload operation based on the first interaction element is received, and in response to the picture upload operation, the current interface is switched from the chat interface to a picture obtaining interface (as shown in a third figure in Fig. 7), for the current user to obtain a picture to be generated.

When an obtaining complete operation on the picture obtaining interface is received, the current interface is switched from the picture obtaining interface to a picture editing interface, a picture to be uploaded is presented in the picture editing interface for the current user to edit the picture to be uploaded, and an upload confirmation control 63 may be further presented in the picture obtaining interface (as shown in a fourth figure in Fig. 7).

When it is detected that the current user triggers the upload confirmation control 63 presented in the picture editing interface, it is determined that the first confirmation operation is received, and in response to the first confirmation operation, a picture to be uploaded corresponding to the first confirmation operation is uploaded as the first original picture of the first interaction element 20, and the interaction prompt information presented in the first interaction element 20 may be updated (as shown in a fifth figure in Fig. 7, where an example in which the current user uploads one first original picture is shown in the figure).

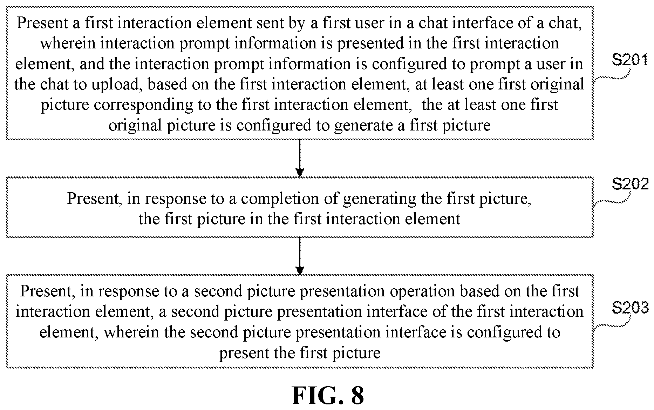

Fig. 8 is a schematic flowchart of another presentation method of an interaction element according to an embodiment of the present disclosure. The solution in this embodiment may be combined with one or more optional solutions in the above embodiment. Optionally, after presenting the first picture in the first interaction element, the method further comprises: presenting a second picture presentation interface of the first interaction element in response to a second picture presentation operation based on the first interaction element, wherein the second picture presentation interface is configured to present the first picture.

Correspondingly, as shown in Fig. 8, the presentation method of the interaction element provided by this embodiment comprises the following steps.

S201: a first interaction element sent by a first user is presented in a chat interface of a chat, wherein interaction prompt information is presented in the first interaction element, and the interaction prompt information is configured to prompt a user in the chat to upload at least one first original picture corresponding to the first interaction element based on the first interaction element, the at least one first original picture is configured to generate a first picture.

S202: the first picture is presented in the first interaction element in response to a completion of generating the first picture.

S203: a second picture presentation interface of the first interaction element is presented in response to a second picture presentation operation based on the first interaction element, wherein the second picture presentation interface is configured to present the first picture.

The second picture presentation operation may be a trigger operation configured to instruct to present the first picture of the first interaction element in the second picture presentation interface. The execution manner of the second picture presentation operation is not limited. For example, the second picture presentation operation may comprise an operation of triggering the first interaction element presented in the chat interface, such as an operation of triggering the first interaction element in the case where the first picture has been generated; and/or an operation of triggering a target picture viewing control presented in the chat interface and corresponding to the first interaction element. The target picture viewing control may be presented in response to the generation of the first picture. The second picture presentation interface may be an interface configured to present the first picture of the first interaction element.

In this embodiment, after the first picture is generated, the user in the chat may be supported to view the first picture of the first interaction element by performing the second picture presentation operation, so as to satisfy the user's requirement for viewing the first picture.

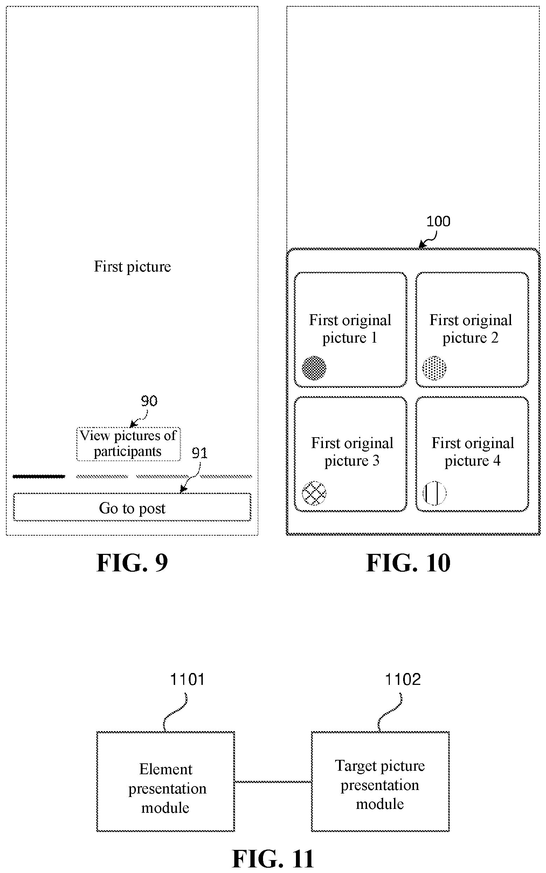

For example, in the case where the second picture presentation operation based on the first interaction element 20 is received, for example, in the case where it is detected that the current user triggers the first interaction element 20 presented in the chat interface after the first picture has been generated, or in the case where it is detected that the current user triggers the target picture viewing control 30 (as shown in Fig. 3) presented in the chat interface, the second picture presentation interface may be presented, for example, the current interface is switched from the chat interface to the second picture presentation interface, and the first picture of the first interaction element 20 is presented in the second picture presentation interface, as shown in Fig. 9.

In this embodiment, one or more first pictures may be presented in the second picture presentation interface, and the user may be supported to switch the first picture currently presented in the second picture presentation interface. For example, one first picture may be presented in the second picture presentation interface, and when the presentation duration of the first picture reaches a preset duration or a picture switching operation of the current user is received, the first picture currently presented in the second picture presentation interface may be switched. The picture switching operation may be a trigger operation configured to instruct to switch the first picture currently presented in the second picture presentation interface, and the execution manner of the picture switching operation is not limited. For example, the picture switching operation may comprise a horizontal sliding operation on the second picture presentation interface.

In some implementations, the current user may be supported to view the first original picture of the first interaction element 20 based on the second picture presentation interface. For example, in the case where it is detected that the current user performs a preset viewing operation in the second picture presentation interface, the at least one first original picture corresponding to the first interaction element 20 may be presented. For example, an original picture panel 100 may be presented in the second picture presentation interface, and the at least one first original picture of the first interaction element 20 may be presented in the original picture panel 100, as shown in Fig. 10. The preset viewing operation may be a trigger operation configured to instruct to view the first original picture, such as an operation of triggering an original picture viewing control 90 presented in the second picture presentation interface.

At this time, optionally, after presenting the second picture presentation interface of the first interaction element, the method further comprises: presenting the at least one first original picture corresponding to the first interaction element in response to the preset viewing operation on the second picture presentation interface.

In some implementations, after presenting the second picture presentation interface of the first interaction element, the method further comprises: generating target media content by using at least part of the first picture in response to a media content generation operation on the second picture presentation interface.

The media content generation operation may be a trigger operation configured to instruct to generate the media content by using at least part of the generated first picture. The execution manner of the media content generation operation is not limited. For example, the media content generation operation may comprise an operation of triggering a media content generation control presented in the second picture presentation interface. The target media content may be understood as media content generated by using at least part of the generated first picture. The target media content may be picture-text content or video content, which is not limited in this embodiment.

In the above implementation, at least part of the users in the chat may be supported to use the first picture of the first interaction element to generate and posting the media content, so as to enrich the manners of generating and posting the media content. The at least part of the users may comprise, for example, the user who uploads the first original picture.

For example, in the case where the media content generation operation on the second picture presentation interface by the current user is received, for example, when it is detected that the current user triggers a media content generation control 91 (as shown in Fig. 9) presented in the second picture presentation interface, the target media content may be generated by using at least part of the first pictures of the first interaction element 20 for the current user to store and/or post the target media content.

In some implementations, the media content editing interface may not be presented, and the target media content may be directly generated in response to the media content generation operation, so as to simplify the generation path of the target media content.

In some other implementations, the media content editing interface may be presented. For example, in the case where the media content generation operation is received, the first picture of the first interaction element may be configured as the media content material of the target media content, and the media content editing interface of the target media content may be presented for the current user to edit the target media content to be generated. In the case where a third confirmation operation on the media content editing interface is received, the target media content may be generated by using the media content material corresponding to the third confirmation operation, so as to satisfy the user's editing requirement for the target media content.

At this time, optionally, prior to generating the target media content by using at least part of the first picture, the method further comprises: using the first picture as a media content material of the target media content, and presenting a media content editing interface of the target media content; and the generating the target media content by using at least part of the first picture comprises: generating the target media content by using a confirmed media content material in response to a third confirmation operation on the media content editing interface.

The media content editing interface may be an interface configured to edit the target media content to be generated, and the editing manner supported by the media content editing interface is not limited, for example, the current user may be supported to delete, add or edit the media content material. The third confirmation operation may be a trigger operation for confirming to generate the target media content, such as an operation of triggering a confirmation control in the media content editing interface. The confirmed media content material may be the media content material of the target media content when the current user performs the third confirmation operation. For example, if the current user does not edit the media content material in the media content editing interface, the confirmed media content material may be the first picture of the first interaction element; and if the current user edits the media content material in the media content editing interface, the confirmed media content material may be the edited media content material.

According to the presentation method of the interaction element provided by this embodiment, the user is supported to view the first picture of the first interaction element in the second picture presentation interface based on the first interaction element, which may further enrich the functions of the first interaction element and facilitate the user to view the picture details of the first target element.

Fig. 11 is a block diagram of a presentation apparatus of an interaction element according to an embodiment of the present disclosure. The apparatus may be implemented in software and/or hardware, may be configured in an electronic device, typically in a mobile phone or a tablet computer, and may perform the presentation method of the interaction element to generate a target picture based on an original picture uploaded by a user in a chat, for example, generate a group photo based on single photos uploaded by users in the chat. As shown in Fig. 11, the presentation apparatus of an interaction element provided by this embodiment comprises an element presentation module 1101 and a target picture presentation module 1102.

The element presentation module 1101 is configured to present a first interaction element sent by a first user in a chat interface of a chat, wherein interaction prompt information is presented in the first interaction element, and the interaction prompt information is configured to prompt a user in the chat to upload, based on the first interaction element, at least one first original picture corresponding to the first interaction element, the at least one first original picture is configured to generate a first picture.

The target picture presentation module 1102 is configured to present, in response to a completion of generating the first picture, the first picture in the first interaction element.

In the presentation apparatus of an interaction element provided by this embodiment, the first interaction element sent by the first user is presented in the chat interface of the chat by the element presentation module, the interaction prompt information is presented in the first interaction element, and the interaction prompt information is configured to prompt the user in the chat to upload at least one first original picture corresponding to the first interaction element based on the first interaction element, wherein the at least one first original picture is configured to generate the first picture; and the first picture is presented in the first interaction element by the target picture presentation module in response to a completion of generating the first picture. In the technical solutions used by this embodiment, the interaction element is supported to be sent in the chat interface, and the original picture is uploaded and the target picture is generated and presented based on the interaction element, which may enrich the interaction manners based on the chat interface and the content supported to be sent and presented in the chat interface.

Optionally, the first picture is generated based on first original pictures uploaded by at least two users in the chat.

Further, the presentation apparatus of the interaction element may further comprise: an obtaining interface displaying module, a picture editing interface presentation module and a picture uploading module. The obtaining interface displaying module is configured to display a picture obtaining interface; the picture editing interface presentation module is configured to determine, in response to an obtaining complete operation on the picture obtaining interface, a picture to be uploaded obtained in the picture obtaining interface by the current user, and display a picture editing interface of the picture to be uploaded; and the picture uploading module is configured to upload, in response to a first confirmation operation on the picture editing interface, a confirmed picture to be uploaded as the at least one first original picture corresponding to the first interaction element.

Optionally, the current user is the first user, and the element presentation module 1101 is further configured to: send, in response to the first confirmation operation on the picture editing interface, the first interaction element in a form of chat information in the chat interface, and present the first interaction element in the chat interface.

Optionally, the current user is the first user, and the presentation apparatus of the interaction element may further comprise an editing panel displaying module. The editing panel displaying module is configured to, prior to displaying the picture obtaining interface, display, in response to a preset trigger operation on the chat interface, an attribute editing panel of the first picture, and present at least one attribute editing item in the attribute editing panel, wherein the at least one attribute editing item comprises a style editing item and/or a number editing item, the style editing item is configured to edit a picture style of the first picture, and the number editing item is configured to edit a target upload number of first original pictures for generating the first picture.

Optionally, the obtaining interface displaying module is further configured to: display, in response to a second confirmation operation on the attribute editing panel, the picture obtaining interface.

Optionally, the preset trigger operation is applied on a preset control presented in the chat interface; or the preset trigger operation is applied on a second interaction element sent by a second user, a second picture is presented in the second interaction element, and the second picture is generated based on at least one second original picture corresponding to the second interaction element.

Optionally, the preset trigger operation is applied on a second interaction element sent by a second user, and the presentation apparatus of the interaction element may further comprise a first picture confirmation module. The first picture confirmation module is configured to use the at least one second original picture corresponding to the second interaction element as part of the first original pictures corresponding to the first interaction element.

Optionally, the current user is not the first user, and the obtaining interface displaying module is further configured to: display, in response to a picture upload operation based on the first interaction element, the picture obtaining interface.

Optionally, the first picture is generated when a current condition satisfies a preset picture generation condition, and the preset picture generation condition comprises: a total number of the first original pictures reaching the target upload number; or a picture generation operation based on the first interaction element being received; or the first interaction element being sent.

Further, the presentation apparatus of the interaction element may further comprise a first interface presentation module . The first interface presentation module is configured to, after presenting the first interaction element sent by the first user in the chat interface of the chat, display a first picture presentation interface of the first interaction element in response to a first picture presentation operation based on the first interaction element, wherein the first picture presentation interface is configured to present the at least one first original picture.

Optionally, a picture generation control and/or a picture upload control are further presented in the first picture presentation interface, the picture generation control is configured to trigger to perform a picture generation operation based on the first interaction element, and the picture upload control is configured to trigger to perform a picture upload operation based on the first interaction element.

Further, the presentation apparatus of the interaction element may further comprise a second interface presentation module . The second interface presentation module is configured to, after presenting the first picture in the first interaction element, present a second picture presentation interface of the first interaction element in response to a second picture presentation operation based on the first interaction element, wherein the second picture presentation interface is configured to present the first picture.

Further, the presentation apparatus of the interaction element may further comprise an original picture presentation module and/or a media content generation module. The original picture presentation module is configured to, after presenting the second picture presentation interface of the first interaction element, present the at least one first original picture corresponding to the first interaction element in response to a preset viewing operation on the second picture presentation interface; and/or the media content generation module is configured to, after presenting the second picture presentation interface of the first interaction element, generate target media content by using at least part of the first picture in response to a media content generation operation on the second picture presentation interface.

Further, the presentation apparatus of the interaction element may further comprise a media content editing interface presentation module . The media content editing interface presentation module is configured to, before generating the target media content by using at least part of the first picture, use the first picture as a media content material of the target media content, and present a media content editing interface of the target media content; and the media content generation module is further configured to generate, in response to a third confirmation operation on the media content editing interface, the target media content by using a confirmed media content material.

Further, the presentation apparatus of the interaction element may further comprise a preview image presentation module , an invitation panel presentation module and a prompt panel presentation module . The preview image presentation module is configured to, after presenting the first interaction element sent by the first user in the chat interface of the chat, present, in response to a picture preview operation based on the first interaction element, a preview image of the first picture; the invitation panel presentation module is configured to, after presenting the first interaction element sent by the first user in the chat interface of the chat, present, in response to an invitation operation based on the first interaction element, an invitation panel, wherein the invitation panel is configured to trigger to invite a user to be invited to join the chat to view the first interaction element, and the user to be invited is a user selected by the current user in the invitation panel; and the prompt panel presentation module is configured to, after presenting the first interaction element sent by the first user in the chat interface of the chat, present, in response to a prompt operation based on the first interaction element, a prompt panel, wherein the prompt panel supports sending preset chat information to a user to be prompted, the user to be prompted is a user selected by the current user in the prompt panel, and the preset chat information is configured to prompt the user to be prompted to view the first interaction element.

Optionally, the target picture presentation module 1102 is further configured to switch and present different first pictures in the first interaction element.

Further, the presentation apparatus of the interaction element may further comprise a second picture confirmation module. The second picture confirmation module is configured to determine, in response to the picture confirmation operation, at least one generated picture corresponding to a picture confirmation operation in a plurality of generated pictures as the first picture, wherein each generated picture is generated based on the at least one first original picture.

Optionally, the interaction prompt information comprises a current upload progress of the first original picture and/or a user identifier of an upload user of the at least one first original picture, wherein the upload user is a user who uploads the at least one first original picture.

The presentation apparatus of the interaction element provided by the embodiment of the present disclosure may perform the presentation method of the interaction element provided by any embodiment of the present disclosure, and has corresponding functional modules and beneficial effects for performing the interaction element presentation method. For technical details not described in detail in this embodiment, reference may be made to the presentation method of the interaction element provided by any embodiment of the present disclosure.

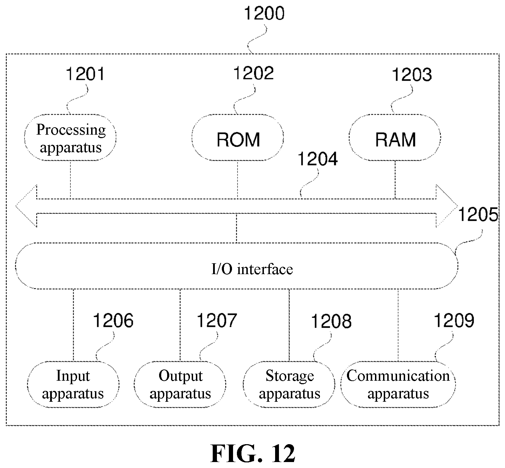

Reference is made to Fig. 12 below, which illustrates a schematic diagram of a structure of an electronic device (for example, a terminal device) 1200 suitable for implementing the embodiments of the present disclosure. The terminal device in the embodiments of the present disclosure may include, but is not limited to, mobile terminals such as a mobile phone, a notebook computer, a digital broadcasting receiver, a personal digital assistant (PDA), a tablet computer (PAD), a portable media player (PMP), a vehicle-mounted terminal (for example, a vehicle-mounted navigation terminal), and fixed terminals such as a digital TV and a desktop computer. The electronic device shown in Fig. 12 is only an example, and should not impose any limitation on the functions and the range of use of the embodiments of the present disclosure.

As shown in Fig. 12, the electronic device 1200 may include a processing apparatus (such as a central processing unit, a graphics processor, etc.) 1201 that may perform various appropriate actions and processing based on a program stored in a read-only memory (ROM) 1202 or a program loaded from a storage apparatus 1208 into a random access memory (RAM) 1203. In the RAM 1203, various programs and data required for the operation of the electronic device 1200 are also stored. The processing apparatus 1201, the ROM 1202, and the RAM 1203 are connected to each other through a bus 1204. An input/output (I/O) interface 1205 is also connected to the bus 1204.

Generally, the following apparatuses may be connected to the I/O interface 1205: an input apparatus 1206 including, for example, a touch screen, a touchpad, a keyboard, a mouse, a camera, a microphone, an accelerometer, a gyroscope, etc.; an output apparatus 1207 including, for example, a liquid crystal display (LCD), a speaker, a vibrator, etc.; a storage apparatus 1208 including, for example, a magnetic tape, a hard disk, etc.; and a communication apparatus 1209. The communication apparatus 1209 may allow the electronic device 1200 to perform wireless or wired communication with other devices to exchange data. Although Fig. 12 shows the electronic device 1200 with various apparatuses, it should be understood that it is not required to implement or have all of the illustrated apparatuses. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program includes program code for performing the method shown in the flowchart. In such an embodiment, the computer program may be downloaded and installed from a network through the communication apparatus 1209, or installed from the storage apparatus 1208, or installed from the ROM 1202. When the computer program is executed by the processing apparatus 1201, the above-mentioned functions defined in the method of the embodiments of the present disclosure are executed.

It should be noted that the above-mentioned computer-readable medium in the present disclosure may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, which may be used by or in combination with an instruction execution system, apparatus, or device. In the present disclosure, the computer-readable signal medium may include a data signal propagated in a baseband or as part of a carrier wave, and computer-readable program code is carried in the data signal. The data signal propagated in this way may take many forms, including but not limited to an electromagnetic signal, an optical signal, or any suitable combination thereof. The computer-readable signal medium may also be any computer-readable medium other than the computer-readable storage medium, and the computer-readable signal medium may send, propagate, or transmit the program used by or in combination with the instruction execution system, apparatus, or device. The program code contained on the computer-readable medium may be transmitted by any suitable medium, including but not limited to: a wire, an optical cable, a radio frequency (RF), etc., or any suitable combination thereof.

In some implementations, the client and the server may communicate using any currently known or future developed network protocol, such as the HyperText Transfer Protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be included in the above electronic device, or it may exist alone without being assembled into the electronic device.

The above computer-readable medium carries one or more programs, and when the one or more programs are executed by the electronic device, the electronic device: presents a first interaction element sent by a first user in a chat interface of a chat, where interaction prompt information is presented in the first interaction element, and the interaction prompt information is configured to prompt a user in the chat to upload at least one first original picture corresponding to the first interaction element based on the first interaction element, where the at least one first original picture is configured to generate a first picture; and presents the first picture in the first interaction element in response to the first picture being generated.

The computer program code for performing the operations of the present disclosure may be written in one or more programming languages or a combination thereof, where the programming languages include, but are not limited to, an object-oriented programming language, such as Java, Smalltalk, C++, and include conventional procedural programming languages, such as "C" language or similar programming languages. The program code may be executed entirely on a computer of a user, partly on the computer of the user, as a stand-alone software package, partly on the computer of the user and partly on a remote computer, or entirely on the remote computer or a server. In the case of involving the remote computer, the remote computer may be connected to the computer of the user through any kind of network, including a local area network (LAN) or a wide area network (WAN), or it may be connected to an external computer (for example, connected by using Internet provided by an Internet service provider).

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented in a software manner, and may also be implemented in a hardware manner. The name of a module does not constitute a limitation on the unit itself under certain circumstances.

The functions described above herein may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electrical, magnetic, optical, electromagnetic, infrared, or semiconductor system, apparatus or device, or any suitable combination of the above. More specific examples of the machine-readable storage medium may include an electrical connection based on one or more lines, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

According to one or more embodiments of the present disclosure, Example 1 provides a presentation method of an interaction element, comprising:
presenting a first interaction element sent by a first user in a chat interface of a chat, where interaction prompt information is presented in the first interaction element, and the interaction prompt information is configured to prompt a user in the chat to upload, based on the first interaction element, at least one first original picture corresponding to the first interaction element, the at least one first original picture is configured to generate a first picture; and
presenting, in response to a completion of generating the first picture, the first picture in the first interaction element.

According to one or more embodiments of the present disclosure, Example 2 is the method according to Example 1, wherein the first picture is generated based on first original pictures uploaded by at least two users in the chat.

According to one or more embodiments of the present disclosure, Example 3 is the method according to Example 1, further comprising:
presenting a picture obtaining interface;
determining, in response to an obtaining complete operation on the picture obtaining interface, a picture to be uploaded obtained in the picture obtaining interface by a current user, and presenting a picture editing interface of the picture to be uploaded; and
uploading, in response to a first confirmation operation on the picture editing interface, a confirmed picture to be uploaded as the at least one first original picture corresponding to the first interaction element.

According to one or more embodiments of the present disclosure, Example 4 is the method according to Example 3, wherein the current user is the first user, and presenting the first interaction element sent by the first user in the chat interface of the chat comprises:
sending, in response to the first confirmation operation on the picture editing interface, the first interaction element in a form of chat information in the chat interface, and presenting the first interaction element in the chat interface.

According to one or more embodiments of the present disclosure, Example 5 is the method according to Example 3, wherein the current user is the first user, and prior to presenting the picture obtaining interface, the method further comprises:
presenting, in response to a preset trigger operation on the chat interface, an attribute editing panel of the first picture, and presenting at least one attribute editing item in the attribute editing panel, wherein the at least one attribute editing item comprises a style editing item and/or a number editing item, the style editing item is configured to edit a picture style of the first picture, and the number editing item is configured to edit a target upload number of first original pictures for generating the first picture.

According to one or more embodiments of the present disclosure, Example 6 is the method according to Example 5, wherein presenting the picture obtaining interface comprises:
presenting, in response to a second confirmation operation on the attribute editing panel, the picture obtaining interface.

According to one or more embodiments of the present disclosure, Example 7 is the method according to Example 5, wherein the preset trigger operation is applied on a preset control presented in the chat interface; or
the preset trigger operation is applied on a second interaction element sent by a second user, a second picture is presented in the second interaction element, and the second picture is generated based on at least one second original picture corresponding to the second interaction element.

According to one or more embodiments of the present disclosure, Example 8 is the method according to Example 7, wherein the preset trigger operation is applied on a second interaction element sent by a second user, and the method further comprises:
using the at least one second original picture corresponding to the second interaction element as part of the first original pictures corresponding to the first interaction element.

According to one or more embodiments of the present disclosure, Example 9 is the method according to Example 3, wherein the current user is not the first user, and presenting the picture obtaining interface comprises:
presenting, in response to a picture upload operation based on the first interaction element, the picture obtaining interface.

According to one or more embodiments of the present disclosure, Example 10 is the method according to Example 1, wherein the first picture is generated in response a current condition satisfying a preset picture generation condition, and the preset picture generation condition comprises:
a total number of the first original pictures reaching a target upload number; or
receiving a picture generation operation based on the first interaction element; or
a completion of sending the first interaction element being sent.

According to one or more embodiments of the present disclosure, Example 11 is the method according to any one of Examples 1-10, wherein after presenting the first interaction element sent by the first user in the chat interface of the chat, the method further comprises:
displaying, in response to a first picture presentation operation based on the first interaction element, a first picture presentation interface of the first interaction element, wherein the first picture presentation interface is configured to present the at least one first original picture.

According to one or more embodiments of the present disclosure, Example 12 is the method according to Example 11, wherein a picture generation control and/or a picture upload control are further presented in the first picture presentation interface, the picture generation control is configured to trigger an execution of a picture generation operation based on the first interaction element, and the picture upload control is configured to trigger an execution of a picture upload operation based on the first interaction element.

According to one or more embodiments of the present disclosure, Example 13 is the method according to any one of Examples 1-10, wherein after presenting the first picture in the first interaction element, the method further comprises:
presenting, in response to a second picture presentation operation based on the first interaction element, a second picture presentation interface of the first interaction element, wherein the second picture presentation interface is configured to present the first picture.

According to one or more embodiments of the present disclosure, Example 14 is the method according to Example 13, wherein after presenting the second picture presentation interface of the first interaction element, the method further comprises:
presenting, in response to a preset viewing operation on the second picture presentation interface, the at least one first original picture corresponding to the first interaction element; and/or
generating, in response to a media content generation operation on the second picture presentation interface, target media content by using at least part of the first picture.

According to one or more embodiments of the present disclosure, Example 15 is the method according to Example 14, wherein before generating the target media content by using at least part of the first picture, the method further comprises:
determining the first picture as a media content material of the target media content, and presenting a media content editing interface of the target media content, and
and wherein generating the target media content by using at least part of the first picture comprises:
   generating, in response to a third confirmation operation on the media content editing interface, the target media content based on a confirmed media content material.

According to one or more embodiments of the present disclosure, Example 16 is the method according to any one of Examples 1-10, wherein after presenting the first interaction element sent by the first user in the chat interface of the chat, the method further comprises at least one of the following:
presenting, in response to a picture preview operation based on the first interaction element, a preview image of the first picture;
presenting, in response to an invitation operation based on the first interaction element, an invitation panel, wherein the invitation panel is configured to trigger an invitation for a user to be invited to join the chat to view the first interaction element, and the user to be invited is a user selected by the current user in the invitation panel; and
presenting, in response to a prompt operation based on the first interaction element, a prompt panel, wherein the prompt panel supports sending preset chat information to a user to be prompted, the user to be prompted is a user selected by the current user in the prompt panel, and the preset chat information is configured to prompt the user to be prompted to view the first interaction element.

According to one or more embodiments of the present disclosure, Example 17 is the method according to any one of Examples 1-10, wherein presenting the first picture in the first interaction element comprises:
switching to present different first pictures in the first interaction element.

According to one or more embodiments of the present disclosure, Example 18 is the method according to any one of Examples 1-10, further comprising:
determining, in response to a picture confirmation operation, at least one generated picture corresponding to the picture confirmation operation in a plurality of generated pictures as the first picture, wherein each generated picture is generated based on the at least one first original picture.

According to one or more embodiments of the present disclosure, Example 19 is the method according to any one of Examples 1-10, wherein the interaction prompt information comprises a current upload progress of the first original picture and/or a user identifier of an upload user of the at least one first original picture, wherein the upload user is a user who uploads the at least one first original picture.

According to one or more embodiments of the present disclosure, Example 20 provides a presentation apparatus of an interaction element, comprising:
an element presentation module, configured to present a first interaction element sent by a first user in a chat interface of a chat, wherein interaction prompt information is presented in the first interaction element, and the interaction prompt information is configured to prompt a user in the chat to upload at least one first original picture corresponding to the first interaction element based on the first interaction element, wherein the at least one first original picture is configured to generate a first picture; and
a target picture presentation module , configured to present the first picture in the first interaction element in response to the first picture being generated.

According to one or more embodiments of the present disclosure, Example 21 provides an electronic device, comprising:
one or more processors; and
a memory, configured to store one or more programs,
wherein the one or more programs, when executed by the one or more processors, cause the one or more processors to implement the presentation method of the interaction element according to any one of Examples 1-19.

According to one or more embodiments of the present disclosure, Example 22 provides a computer-readable storage medium having a computer program stored thereon, where the program, when executed by a processor, implements the presentation method of the interaction element according to any one of Examples 1-19.

The above description is only preferred embodiments of the present disclosure and an explanation of the applied technical principles. Those skilled in the art should understand that the disclosed scope involved in the present disclosure is not limited to technical solutions formed by specific combinations of the above technical features, and should also cover other technical solutions formed by any combination of the above technical features or their equivalent features without departing from the above disclosed concept. For example, a technical solution formed by replacing the above features with technical features with similar functions disclosed in the present disclosure (but not limited thereto).

Furthermore, although the various operations are depicted in a particular order, this should not be understood as requiring these operations to be performed in the particular order shown or in a sequential order. Under certain circumstances, multitasking and parallel processing may be advantageous. Likewise, although the above discussion contains a number of specific implementation details, these should not be construed as limiting the scope of the present disclosure. Certain features described in the context of separate embodiments may also be implemented in combination in a single embodiment. Conversely, various features described in the context of a single embodiment may also be implemented in a plurality of embodiments individually or in any suitable sub-combination.

Although the subject matter has been described in language specific to structural features and/or logical actions of the method, it should be understood that the subject matter defined in the appended claims is not necessarily limited to the specific features or actions described above. Conversely, the specific features and actions described above are merely exemplary forms for implementing the claims.

## Claims

1. A presentation method of an interaction element, comprising:
presenting a first interaction element sent by a first user in a chat interface of a chat, wherein interaction prompt information is presented in the first interaction element, and the interaction prompt information is configured to prompt a user in the chat to upload, based on the first interaction element, at least one first original picture corresponding to the first interaction element, the at least one first original picture is configured to generate a first picture; and
presenting, in response to a completion of generating the first picture, the first picture in the first interaction element.

2. The method of claim 1, wherein the first picture is generated based on first original pictures uploaded by at least two users in the chat.

3. The method of claim 1, further comprising:
presenting a picture obtaining interface;
determining, in response to an obtaining complete operation on the picture obtaining interface, a picture to be uploaded obtained in the picture obtaining interface by a current user, and presenting a picture editing interface of the picture to be uploaded; and
uploading, in response to a first confirmation operation on the picture editing interface, a confirmed picture to be uploaded as the at least one first original picture corresponding to the first interaction element.

4. The method of claim 3, wherein the current user is the first user, and presenting the first interaction element sent by the first user in the chat interface of the chat comprises:
sending, in response to the first confirmation operation on the picture editing interface, the first interaction element in a form of chat information in the chat interface, and presenting the first interaction element in the chat interface.

5. The method of claim 3, wherein the current user is the first user, and prior to presenting the picture obtaining interface, the method further comprises:
presenting, in response to a preset trigger operation on the chat interface, an attribute editing panel of the first picture, and presenting at least one attribute editing item in the attribute editing panel, wherein the at least one attribute editing item comprises a style editing item and/or a number editing item, the style editing item is configured to edit a picture style of the first picture, and the number editing item is configured to edit a target upload number of first original pictures for generating the first picture.

6. The method of claim 5, wherein presenting the picture obtaining interface comprises:
presenting, in response to a second confirmation operation on the attribute editing panel, the picture obtaining interface.

7. The method of claim 5, wherein the preset trigger operation is applied on a preset control presented in the chat interface; or
the preset trigger operation is applied on a second interaction element sent by a second user, wherein a second picture is presented in the second interaction element, and the second picture is generated based on at least one second original picture corresponding to the second interaction element.

8. The method of claim 7, wherein the preset trigger operation is applied on the second interaction element sent by the second user, and the method further comprises:
using the at least one second original picture corresponding to the second interaction element as part of the first original pictures corresponding to the first interaction element.

9. The method of claim 3, wherein the current user is not the first user, and presenting the picture obtaining interface comprises:
presenting, in response to a picture upload operation based on the first interaction element, the picture obtaining interface.

10. The method of claim 1, wherein the first picture is generated in response to a current condition satisfying a preset picture generation condition, and the preset picture generation condition comprises:
a total number of the first original pictures reaching a target upload number;
receiving a picture generation operation based on the first interaction element; or
a completion of sending the first interaction element.

11. The method of any of claims 1-10, wherein after presenting the first interaction element sent by the first user in the chat interface of the chat, the method further comprises:
displaying, in response to a first picture presentation operation based on the first interaction element, a first picture presentation interface of the first interaction element, wherein the first picture presentation interface is configured to present the at least one first original picture.

12. The method of claim 11, wherein at least one of a picture generation control or a picture upload control is further presented in the first picture presentation interface, the picture generation control is configured to trigger an execution of a picture generation operation based on the first interaction element, and the picture upload control is configured to trigger an execution of a picture upload operation based on the first interaction element.

13. The method of any of claims 1-10, wherein after presenting the first picture in the first interaction element, the method further comprises:
presenting, in response to a second picture presentation operation based on the first interaction element, a second picture presentation interface of the first interaction element, wherein the second picture presentation interface is configured to present the first picture.

14. The method of claim 13, wherein after presenting the second picture presentation interface of the first interaction element, the method further comprises at least one of the following:
presenting, in response to a preset viewing operation on the second picture presentation interface, the at least one first original picture corresponding to the first interaction element; or
generating, in response to a media content generation operation on the second picture presentation interface, target media content based on at least part of the first picture.

15. The method of claim 14, further comprising:
determining the first picture as a media content material of the target media content, and presenting a media content editing interface of the target media content,
and wherein generating the target media content based on the at least part of the first picture comprises:
generating, in response to a third confirmation operation on the media content editing interface, the target media content based on a confirmed media content material.

16. The method of any of claims 1-10, wherein after presenting the first interaction element sent by the first user in the chat interface of the chat, the method further comprises at least one of the following:
presenting, in response to a picture preview operation based on the first interaction element, a preview image of the first picture;
presenting, in response to an invitation operation based on the first interaction element, an invitation panel, wherein the invitation panel is configured to trigger an invitation for a user to be invited to join the chat to view the first interaction element, and the user to be invited is a user selected by the current user in the invitation panel; and
presenting, in response to a prompt operation based on the first interaction element, a prompt panel, wherein the prompt panel supports sending preset chat information to a user to be prompted, the user to be prompted is a user selected by the current user in the prompt panel, and the preset chat information is configured to prompt the user to be prompted to view the first interaction element.

17. The method of any of claims 1-10, wherein presenting the first picture in the first interaction element comprises:
switch to present different first pictures in the first interaction element.

18. The method of any of claims 1-10, further comprising:
determining, in response to a picture confirmation operation, at least one generated picture corresponding to the picture confirmation operation in a plurality of generated pictures as the first picture, wherein each generated picture is generated based on the at least one first original picture.

19. The method of any of claims 1-10, wherein the interaction prompt information comprises at least one of the following: a current upload progress of the first original picture, and a user identification of an upload user of the at least one first original picture, wherein the upload user is a user who uploads the at least one first original picture.

20. A presentation apparatus of an interaction element, comprising:
an element presentation module, configured to present a first interaction element sent by a first user in a chat interface of a chat, wherein interaction prompt information is presented in the first interaction element, and the interaction prompt information is configured to prompt a user in the chat to upload, based on the first interaction element, at least one first original picture corresponding to the first interaction element, the at least one first original picture is configured to generate a first picture; and
a target picture presentation module, configured to present, in response to a completion of generating the first picture, the first picture in the first interaction element.

21. An electronic device, comprising:
at least one processor; and
a memory communicatively connected to the at least one processor;
wherein the memory has a computer program executable by the at least one processor stored thereon, and the computer program, when executed by the at least one processor, causes the at least one processor to perform a presentation method of an interaction element of any of claims 1-19.

22. A computer-readable storage medium having computer instructions stored thereon, wherein the computer instructions, when executed by a processor, are configured to cause the processor to perform a presentation method of an interaction element of any of claims 1-19.
